# EUROPÄISCHE PATENTSCHRIFT

(11) **EP 3 667 470 B1**
(45) Veröffentlichungstag und Bekanntmachung des Hinweises auf die Patenterteilung: **21.07.2021**
(21) Anmeldenummer: 19212399.0
(22) Anmeldetag: 29.11.2019
(51) Int. Cl.: G06F 3/041, B60K 37/06, B60K 23/00, G06F 3/038

(54) **VERFAHREN ZUM BEREITSTELLEN EINER BENUTZERSCHNITTSTELLE UND BENUTZERSCHNITTSTELLE EINES FAHRZEUGS**
METHOD TO PROVIDE A USER INTERFACE AND USER INTERFACE OF A VEHICLE
PROCÉDÉ POUR FOURNIR UNE INTERFACE UTILISATEUR ET INTERFACE UTILISATEUR POUR UN VÉHICULE

(30) Priorität: 10.12.2018 DE 102018221352
(43) Veröffentlichungstag der Anmeldung: 17.06.2020
(73) Patentinhaber: Volkswagen AG, 38440 Wolfsburg (DE)
(72) Erfinder: Hecht, Denny, 39365 Eilsleben (DE); Ehmann, Sebastian, 38302 Wolfenbüttel (DE)

(56) Entgegenhaltungen:
- DE-A1-102015 010 376
- DE-U1-202013 007 366
- US-B1- 8 576 199

## Beschreibung

Die vorliegende Erfindung betrifft ein Verfahren zum Bereitstellen einer Benutzerschnittstelle eines Fahrzeugs, wobei die Benutzerschnittstelle mindestens einen mechanisch verstellbaren Regler und ein Touchdisplay aufweist und zum Bedienen von Peripheriegeräten des Fahrzeugs eingerichtet ist und eine Bedienung des mindestens einen mechanisch verstellbaren Reglers eine temporäre Deaktivierung des Touchdisplays bewirkt, so dass eine Bedienung von Peripheriegeräten mittels des Touchdisplays temporär und während der Bedienung des mechanisch verstellbaren Reglers blockiert ist.

Ferner betrifft die Erfindung eine Benutzerschnittstelle eines Fahrzeugs zur Durchführung des Verfahrens, wobei die Benutzerschnittstelle mindestens einen mechanisch verstellbaren Regler und ein Touchdisplay aufweist und zum Bedienen von Peripheriegeräten des Fahrzeugs eingerichtet ist.

Moderne Fahrzeuge besitzen diverse Benutzerschnittstellen, mit denen unterschiedliche Peripheriegeräte des Fahrzeugs bedient werden können, wie beispielsweise das Infotainmentsystem, das Navigationsgerät, die Klimaanlage und vieles mehr. Aufgrund der umfangreichen Einstellmöglichkeiten erfolgt die Bedienung vieler Peripheriegeräte über ein gemeinsames Touchdisplay, das in der Regel am Armaturenbrett des Fahrzeugs angeordnet ist. Dennoch sind parallel hierzu mechanisch verstellbare Regler vorgesehen, die häufig in unmittelbarer Nähe des Touchdisplays angeordnet sind. Über solche mechanisch verstellbaren Regler wird beispielsweise die Lautstärke des Infotainmentsystems, die Sitzheizung und/oder die Warnblickanlage bedient.

Die Bedienung der Peripheriegeräte erfolgt durch den Fahrer zumeist "blind", d.h. ohne unmittelbares Hinsehen, weil er während der Fahrt auf den Straßenverkehr achten muss, was einen längeren Blick auf die Benutzerschnittstelle verhindert. Bei der Bedienung der mechanisch verstellbaren Regler wird dabei nicht selten das Touchdisplay versehentlich berührt, was unter Umständen zur unbeabsichtigten Verstellung eines Peripheriegerätes führen kann. Das Einstellen der vorherigen Konfiguration ist dann oft mit einer längeren Bedienung der Benutzerschnittstelle und einer entsprechenden Ablenkung vom Verkehr verbunden.

Ein gattungsgemäßes Verfahren sowie eine gattungsgemäße Vorrichtung wird in DE 20 2013 007 366 U1 beschrieben. Hierin wird eine Kombibedienvorrichtung zum Ansteuern mindestens einer elektrischen Einrichtung, insbesondere in einem Fahrzeug, mit wenigstens zwei Eingabekanälen jeweils zum Erfassen von Bedieneingaben beschrieben. Die Kombibedienvorrichtung weist eine mit den Eingabekanälen gekoppelte Steuereinrichtung auf, die dazu ausgebildet ist, von den Eingabekanälen in Reaktion auf eine Bedieneingabe auf einen der Eingabekanäle den jeweils anderen zu sperren.

Ein Verfahren zum Betreiben eines Kraftfahrzeugs durch eine Bedienvorrichtung des Kraftfahrzeugs, die ein Touchdisplay aufweist, wird in DE 10 2015 010 376 A1 offenbart.

Aus US 2010/0288567 A1 ist ein Fahrzeug mit einem Touchdisplay als Benutzerschnittstelle bekannt, das unmittelbar am Lenkrad angeordnet ist, und das bei Überschreiten eines vorgegebenen Lenkradeinschlagwinkels deaktiviert wird, wodurch das versehentliche Berühren des Touchdisplays in Kurvenfahrten zu keiner Verstellung eines Peripheriegerätes führt. Bei einer Geradeausfahrt des Fahrzeugs besteht dennoch nach wie vor das Problem, dass das versehentliche Berühren des Touchdisplays zu einem ungewollten Verstellen eines Peripheriegerätes führen kann.

Das in WO 2016/016050 beschriebene Verfahren ist auf die Bedienung der Lichtfunktion eines Kraftfahrzeugscheinwerfers beschränkt, wobei in Abhängigkeit von vorbestimmten Kriterien einzelne Einstellmöglichkeiten deaktiviert werden.

Es sind auch resistive Touchdisplays bekannt, die bei einer etwaigen Berührung des Touchdisplays den hierauf ausgeübten Druck feststellen können, was eine Differenzierung zwischen gewollter und versehentlicher Eingabe erlaubt. Solche resistiven Touchdisplays sind allerdings vergleichsweise kostenintensiv und lassen sich nur mit einem arbeitsintensiven Aufwand in bereits vorhandene Fahrzeuge einbauen.

Hiervon ausgehend ist es die Aufgabe der vorliegenden Erfindung, ein Verfahren zur Bereitstellung einer Benutzerschnittstelle zu schaffen, das die Nachteile des Standes der Technik behebt und eine versehentliche Fehlbedienung vermeidet sowie die Verkehrssicherheit erhöht. Ferner soll eine Benutzerschnittstelle zur Durchführung des Verfahrens angegeben werden.

Diese Aufgabe wird durch das Verfahren nach Anspruch 1 und die Benutzerschnittstelle nach Anspruch 5 gelöst. Im Rahmen des erfindungsgemäßen Verfahrens und der erfindungsgemäßen Vorrichtung ist vorgesehen, dass eine erfolgte Bedienung eines Peripheriegerätes über das Touchdisplay widerrufen und der vorherige Zustand des angesteuerten Peripheriegerätes wiederhergestellt wird, wenn innerhalb einer vorgebbaren Zeitspanne nach einer Bedienung des Touchdisplays eine Bedienung des mindestens einen mechanisch verstellbaren Reglers erfolgt.

Durch das erfindungsgemäße Verfahren und durch die erfindungsgemäße Vorrichtung wird zunächst eine versehentliche Verstellung von Peripheriegeräten verhindert, wenn während der Bedienung eines mechanisch verstellbaren Reglers versehentlich eine Berührung des Touchdisplays erfolgt. Das erfindungsgemäße Verfahren lässt sich durch ein entsprechendes Softwareupdate auch auf bereits verbauten Benutzerschnittstellen installieren, so dass bereits ausgelieferte Fahrzeuge entsprechend nachgerüstet werden können. Darüber hinaus liefert die Erfindung den Vorteil, dass hierdurch auf vergleichsweise kostenintensive resistive Touchdisplays verzichtet werden kann. Ferner trägt die Erfindung der Beobachtung Rechnung, dass auch vor der Bedienung des mechanisch verstellbaren Reglers eine versehentliche Berührung des Touchdisplays mit einer damit verbundenen ungewollten Einstellungsänderung an einem Peripheriegerät verbunden sein kann, was hierdurch wirksam verhindert wird.

Bevorzugte Ausgestaltungen der vorliegenden Erfindung werden nachfolgend und in den Unteransprüchen angegeben.

Die versehentliche Bedienung des Touchdisplays kann nicht nur während der Bedienung des mechanisch verstellbaren Reglers erfolgen, sondern auch beim Auffinden bzw. Ertasten des mechanisch verstellbaren Reglers und/oder beim Wegführen der Hand nach der erfolgten Bedienung.

Nach einer ersten bevorzugten Ausgestaltung der vorliegenden Erfindung ist daher vorgesehen, dass das Touchdisplay nach der Bedienung des mechanisch verstellbaren Reglers aktiviert wird, wobei die Aktivierung des Touchdisplays vorzugsweise nach einer vorgebbaren Verzögerung erfolgt. Die vorgebbare Verzögerung kann beispielsweise 0,5 s, 1 s oder länger betragen und bewirkt zum einen, dass eine versehentliche Berührung des Touchdisplays nach der Bedienung des mechanisch verstellbaren Reglers zu keinen Einstellungsänderungen an einem Peripheriegerät führt. Zum anderen wird vermieden, dass das Touchdisplay bereits bei kurzzeitigen Unterbrechungen der Bedienung des mechanisch verstellbaren Reglers reaktiviert wird. Diese Ausgestaltung der Erfindung ist insbesondere dann vorteilhaft, wenn die Verkehrssituation eine Unterbrechung der Bedienung der Benutzerschnittstelle erfordert und die Bedienung kurzzeitig hiernach fortgesetzt wird.

Unabhängig hiervon ist vorzugsweise vorgesehen, dass die vorbeschriebene automatische Deaktivierung des Touchdisplays durch den Bediener aktivierbar und deaktivierbar ist.

Auch die einzelnen Deaktivierungsbedingungen sind vom Bediener durch die Wahl vorgebbarer Zeitdauern aktivierbar oder deaktivierbar. Wird die vorgebbare Verzögerung T₁ beispielsweise auf 0 s festgelegt, erfolgt die Deaktivierung des Touchdisplays nur während der Bedienung des mechanisch verstellbaren Reglers. Ebenso kann die vorgebbare Zeitspanne T₂ auf 0 s festgesetzt werden, womit kein automatischer Widerruf von Einstellungsänderungen am Peripheriegerät erfolgt, wenn vor der Bedienung des mechanisch verstellbaren Reglers eine Bedienung am Touchdisplay stattgefunden hat.

Schließlich ist nach einer bevorzugten Ausgestaltung der Erfindung vorgesehen, dass der mechanisch verstellbare Regler ein Drehregler, Schieberegler, Kippschalter oder Druckschalter ist. Die vorliegende Erfindung ist jedoch nicht auf diese Auswahl von mechanisch verstellbaren Reglern eingeschränkt und umfasst vielmehr alle Regler, die mechanisch verstellbar sind.

Konkrete Ausgestaltungen der vorliegenden Erfindung werden nachfolgend mit Bezug auf die Figuren beschrieben. Diese zeigen:
- Fig. 1: eine Benutzerschnittstelle und
- Fig. 2: ein Flussdiagramm des Verfahrens.

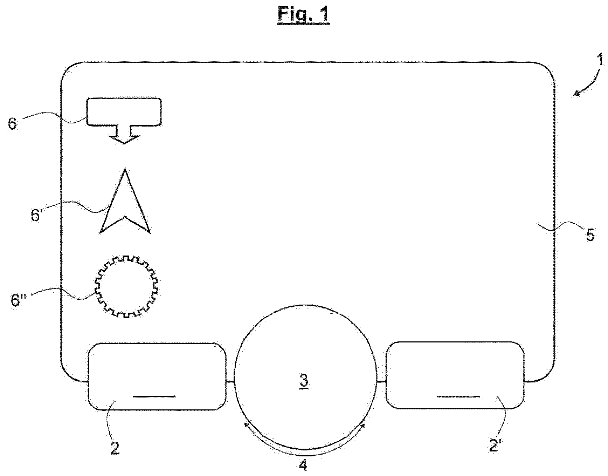

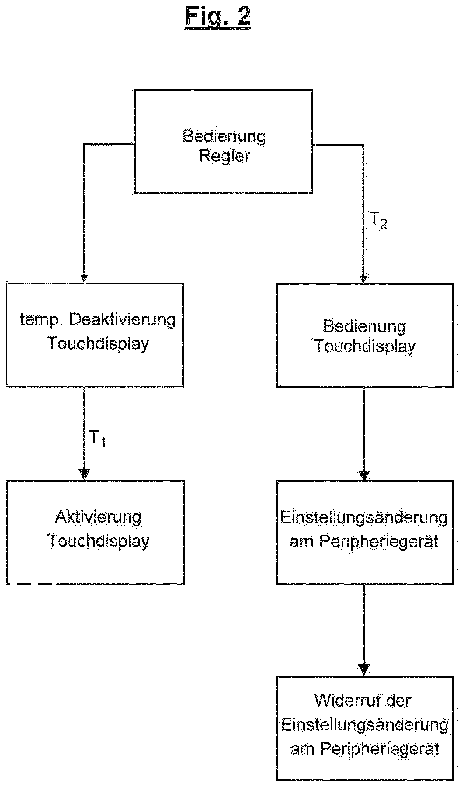

Fig. 1 zeigt eine Benutzerschnittstelle 1, wie sie üblicherweise in Fahrzeugen angeordnet ist und mit der diverse Peripheriegeräte (im Einzelnen nicht gezeigt) bedient werden können. Hierzu besitzt die beispielhaft dargestellte Benutzerschnittstelle 1 mehrere mechanisch verstellbare Regler 2, 2', 3, nämlich zwei Druckschalter 2, 2' und einen Drehregler 3, der in Pfeilrichtung 4 verdrehbar ist und der beispielsweise als Lautstärkeregler ausgebildet ist. Oberhalb der mechanisch verstellbaren Regler 2, 2', 3 ist ein Touchdisplay 5 mit einer Anzeige- und Darstellungsfläche angeordnet, auf dem mehrere Icons 6, 6', 6" zur Auswahl und Bedienung unterschiedlicher Peripheriegeräte und deren Einstellungen dargestellt sind. Beim Bedienen der mechanisch verstellbaren Regler 2, 2', 3, insbesondere des Drehreglers 3, berührt der Bediener nicht selten das Touchdisplay 5, was zu einer unerwünschten Verstellung eines Peripheriegerätes führen kann. Um derartige Fehlbedienungen zu verhindern, ist die Benutzerschnittstelle 1 zur Durchführung des in Fig. 2 dargestellten Verfahrens eingerichtet, wonach Fehlbedienungen vor, während und nach der Bedienung eines mechanisch verstellbaren Reglers 2, 2', 3 verhindert werden.

Hiernach ist zunächst vorgesehen, dass durch eine Bedienung eines Reglers 2, 2', 3 eine temporäre Deaktivierung des Touchdisplays 5 erfolgt. In dieser Zeit können keine Einstellungen der Peripheriegeräte am Touchdisplay 5 geändert werden, weshalb auch versehentliche Berührungen des Touchdisplays 5 keine Einstellungsänderungen bewirkt. Ist nach der Bedienung eines Reglers 2, 2', 3 eine vorgebbare Verzögerung T₁ verstrichen, erfolgt automatisch die Aktivierung (oder Reaktivierung) des Touchdisplays 5, so dass wieder alle Funktionen der Benutzerschnittstelle 1 uneingeschränkt zur Verfügung stehen.

Darüber hinaus stellt das Verfahren fest, ob innerhalb einer vorgebbaren Zeitspanne T₂ vor der Bedienung eines Reglers 2, 2', 3 eine Bedienung des Touchdisplays 5 mit einer damit verbundenen Einstellungsänderung an einem Peripheriegerät erfolgt ist. In diesem Fall erfolgt der Widerruf der Einstellungsänderung und die Wiederherstellung des vorherigen Zustands, so dass auch eine Fehlbedienung beim Auffinden des Reglers 2, 2', 3 und vor dessen Betätigung verhindert bzw. unmittelbar rückgängig gemacht wird.

### Bezugszeichenliste

- 1: Benutzerschnittstelle
- 2: Druckschalter
- 3: Drehregler
- 4: Pfeilrichtung
- 5: Touchdisplay
- 6, 6', 6": Icon
- T₁: Verzögerung
- T₂: Zeitspanne

## Patentansprüche

1. Verfahren zum Bereitstellen einer Benutzerschnittstelle (1) eines Fahrzeugs, wobei die Benutzerschnittstelle (1) mindestens einen mechanisch verstellbaren Regler (2, 2', 3) und ein Touchdisplay (5) aufweist und zum Bedienen von Peripheriegeräten des Fahrzeugs eingerichtet ist und eine Bedienung des mindestens einen mechanisch verstellbaren Reglers (2, 2', 3) eine temporäre Deaktivierung des Touchdisplays (5) bewirkt, so dass eine Bedienung von Peripheriegeräten mittels des Touchdisplays (5) temporär und während der Bedienung des mechanisch verstellbaren Reglers (2, 2', 3) blockiert ist, **dadurch gekennzeichnet, dass** eine erfolgte Bedienung eines Peripheriegerätes über das Touchdisplay (5) widerrufen und der vorherige Zustand des angesteuerten Peripheriegerätes wiederhergestellt wird, wenn innerhalb einer vorgebbaren Zeitspanne T₂ nach einer Bedienung des Touchdisplays eine Bedienung des mindestens einen mechanisch verstellbaren Reglers (2, 2', 3) erfolgt.

2. Verfahren nach Anspruch 1, **dadurch gekennzeichnet, dass** das Touchdisplay (5) nach der Bedienung des mechanisch verstellbaren Reglers (2, 2', 3) aktiviert wird, wobei die Aktivierung des Touchdisplays (5) vorzugsweise nach einer vorgebbaren Verzögerung T₁ erfolgt.

3. Verfahren nach einem der Ansprüche 1 bis 2, **dadurch gekennzeichnet, dass** die automatische Deaktivierung des Touchdisplays (5) aktivierbar und deaktivierbar ist.

4. Verfahren nach einem der Ansprüche 1 bis 3, **dadurch gekennzeichnet, dass** der mechanisch verstellbare Regler (2, 2', 3) ein Drehregler (3), Schieberegler, Kippschalter oder Druckschalter (2, 2') ist.

5. Benutzerschnittstelle eines Fahrzeugs zur Durchführung des Verfahrens nach einem der Ansprüche 1 bis 4, wobei die Benutzerschnittstelle (1) mindestens einen mechanisch verstellbaren Regler (2, 2', 3) und ein Touchdisplay (5) aufweist und zum Bedienen von Peripheriegeräten des Fahrzeugs eingerichtet ist, wobei eine Bedienung des mindestens einen mechanisch verstellbaren Reglers (2, 2', 3) eine temporäre Deaktivierung des Touchdisplays (5) bewirkt, so dass eine Bedienung von Peripheriegeräten mittels des Touchdisplays (5) temporär und während der Bedienung des mechanisch verstellbaren Reglers (2, 2', 3) blockiert ist, **dadurch gekennzeichnet, dass** eine erfolgte Bedienung eines Peripheriegerätes über das Touchdisplay (5) widerrufen und der vorherige Zustand des angesteuerten Peripheriegerätes wiederhergestellt wird, wenn innerhalb einer vorgebbaren Zeitspanne T₂ nach einer Bedienung des Touchdisplays (5) eine Bedienung des mindestens einen mechanisch verstellbaren Reglers (2, 2', 5) erfolgt.

6. Benutzerschnittstelle nach Anspruch 5, **dadurch gekennzeichnet, dass** das Touchdisplay (5) nach der Bedienung des mechanisch verstellbaren Reglers (2, 2', 3) aktiviert wird, wobei die Aktivierung des Touchdisplays (5) vorzugsweise nach einer vorgebbaren Verzögerung T₁ erfolgt.

7. Benutzerschnittstelle nach einem der Ansprüche 5 oder 6, **dadurch gekennzeichnet, dass** die automatische Deaktivierung des Touchdisplays (5) aktivierbar und deaktivierbar ist.

8. Benutzerschnittstelle nach Anspruch 5, **dadurch gekennzeichnet, dass** der mechanisch verstellbare Regler (2, 2', 3) ein Drehregler (3), Schieberegler, Kippschalter oder Druckschalter (2, 2') ist.

## Claims

1. Method for providing a user interface (1) of a vehicle, wherein the user interface (1) has at least one mechanically adjustable controller (2, 2', 3) and a touch display (5) and is configured so as to operate peripheral devices of the vehicle, and operating the at least one mechanically adjustable controller (2, 2', 3) brings about temporary deactivation of the touch display (5), such that operation of peripheral devices by way of the touch display (5) is temporarily blocked during the operation of the mechanically adjustable controller (2, 2', 3), **characterized in that** an operation performed on a peripheral device via the touch display (5) is revoked and the previous state of the actuated peripheral device is reinstated if the at least one mechanically adjustable controller (2, 2', 3) is operated within a predefinable time period T₂ following operation of the touch display.

2. Method according to Claim 1, **characterized in that** the touch display (5) is activated following the operation of the mechanically adjustable controller (2, 2', 3), wherein the touch display (5) is preferably activated following a predefinable delay T₁.

3. Method according to either of Claims 1 and 2, **characterized in that** the automatic deactivation of the touch display (5) is able to be activated and deactivated.

4. Method according to one of Claims 1 to 3, **characterized in that** the mechanically adjustable controller (2, 2', 3) is a rotary controller (3), slide controller, toggle switch or pressure switch (2, 2').

5. User interface of a vehicle for performing the method according to one of Claims 1 to 4, wherein the user interface (1) has at least one mechanically adjustable controller (2, 2', 3) and a touch display (5) and is configured so as to operate peripheral devices of the vehicle, wherein operating the at least one mechanically adjustable controller (2, 2', 3) brings about temporary deactivation of the touch display (5), such that operation of peripheral devices by way of the touch display (5) is temporarily blocked during the operation of the mechanically adjustable controller (2, 2', 3), **characterized in that** an operation performed on a peripheral device via the touch display (5) is revoked and the previous state of the actuated peripheral device is reinstated if the at least one mechanically adjustable controller (2, 2', 5) is operated within a predefinable time period T₂ following operation of the touch display (5).

6. User interface according to Claim 5, **characterized in that** the touch display (5) is activated following the operation of the mechanically adjustable controller (2, 2', 3), wherein the touch display (5) is preferably activated following a predefinable delay T₁.

7. User interface according to either of Claims 5 and 6, **characterized in that** the automatic deactivation of the touch display (5) is able to be activated and deactivated.

8. User interface according to Claim 5, **characterized in that** the mechanically adjustable controller (2, 2', 3) is a rotary controller (3), slide controller, toggle switch or pressure switch (2, 2').

## Revendications

1. Procédé permettant de fournir une interface utilisateur (1) d'un véhicule, dans lequel l'interface utilisateur (1) présente au moins un dispositif de réglage (2, 2', 3) à réglage mécanique et un écran tactile (5) et est aménagée pour commander des appareils périphériques du véhicule, et une commande de l'au moins un dispositif de réglage (2, 2', 3) à réglage mécanique provoque une désactivation temporaire de l'écran tactile (5), de sorte qu'une commande des appareils périphériques au moyen de l'écran tactile (5) est bloquée temporairement et pendant la commande du dispositif de réglage (2, 2', 3) à réglage mécanique,
**caractérisé en ce qu'**une commande effectuée sur un appareil périphérique par l'intermédiaire de l'écran tactile (5) est annulée et l'état précédent de l'appareil périphérique piloté est rétabli si dans un délai T₂ prédéfinissable après une commande de l'écran tactile, une commande de l'au moins un dispositif de réglage (2, 2', 3) à réglage mécanique a lieu.

2. Procédé selon la revendication 1, **caractérisé en ce que** l'écran tactile (5) est activé après la commande du dispositif de réglage (2, 2', 3) à réglage mécanique, l'activation de l'écran tactile (5) ayant lieu de préférence après une temporisation T₁ prédéfinissable.

3. Procédé selon l'une quelconque des revendications 1 et 2, **caractérisé en ce que** la désactivation automatique de l'écran tactile (5) peut être activée et désactivée.

4. Procédé selon l'une quelconque des revendications 1 à 3, **caractérisé en ce que** le dispositif de réglage (2, 2', 3) à réglage mécanique est un bouton de réglage rotatif (3), un curseur, un interrupteur à bascule ou un interrupteur à poussoir (2, 2').

5. Interface utilisateur d'un véhicule permettant d'exécuter le procédé selon l'une quelconque des revendications 1 à 4, l'interface utilisateur (1) présentant au moins un dispositif de réglage (2, 2', 3) à réglage mécanique et un écran tactile (5) et étant aménagée pour commander des appareils périphériques du véhicule, une commande de l'au moins un dispositif de réglage (2, 2', 3) à réglage mécanique provoquant une désactivation temporaire de l'écran tactile (5) de sorte qu'une commande des appareils périphériques au moyen de l'écran tactile (5) est bloquée temporairement et pendant la commande du dispositif de réglage (2, 2', 3) à réglage mécanique,
**caractérisée en ce qu'**une commande effectuée sur un appareil périphérique par l'intermédiaire de l'écran tactile (5) est annulée et l'état précédent de l'appareil périphérique piloté est rétabli si dans un délai T₂ prédéfinissable après une commande de l'écran tactile (5), une commande de l'au moins un dispositif de réglage (2, 2', 5) à réglage mécanique a lieu.

6. Interface utilisateur selon la revendication 5, **caractérisée en ce que** l'écran tactile (5) est activé après la commande du dispositif de réglage (2, 2', 3) à réglage mécanique, l'activation de l'écran tactile (5) ayant lieu de préférence après une temporisation T₁ prédéfinissable.

7. Interface utilisateur selon l'une quelconque des revendications 5 et 6, **caractérisée en ce que** la désactivation automatique de l'écran tactile (5) peut être activée et désactivée.

8. Interface utilisateur selon la revendication 5, **caractérisée en ce que** le dispositif de réglage (2, 2', 3) à réglage mécanique est un bouton de réglage rotatif (3), un curseur, un interrupteur à bascule ou un interrupteur à poussoir (2, 2').
